# EUROPÄISCHE PATENTSCHRIFT

(11) **EP 1 954 897 B1**
(45) Veröffentlichungstag und Bekanntmachung des Hinweises auf die Patenterteilung: **21.09.2011**
(21) Anmeldenummer: 06724789.0
(22) Anmeldetag: 25.04.2006
(51) Int. Cl.: E04B 1/19

(54) **Verbindungsknoten für ein Raumtragwerk, insbesondere für eine geodätische Struktur**
Connection node for a three-dimensional framework, in particular for a geodesic structure
Noeuds de liaison pour un ouvrage porteur en trois dimensions et en particulier pour une structure géodésique

(30) Priorität: 14.11.2005 DE 202005017822 U
(43) Veröffentlichungstag der Anmeldung: 13.08.2008
(73) Patentinhaber: Schneider, Michael, 10437 Berlin (DE); Fulland, Carsten, 10119 Berlin (DE); Overschmidt, Gordian, 10119 Berlin (DE)
(72) Erfinder: Schneider, Michael, 10437 Berlin (DE); Fulland, Carsten, 10119 Berlin (DE); Overschmidt, Gordian, 10119 Berlin (DE)
(74) Vertreter: Schneider, Henry
(86) Internationale Anmeldenummer: PCT/EP2006/004408
(87) Internationale Veröffentlichungsnummer: WO 2007/054136

(56) Entgegenhaltungen:
- DE-A1- 2 110 157
- GB-A- 2 022 647
- US-A- 4 099 888

## Beschreibung

Die Erfindung betrifft einen Verbindungsknoten und ein Raumtragwerk, insbesondere für eine geodätische Struktur mit den im Oberbegriff des Anspruchs 1 und 9 genannten Merkmalen.

Aus der Patentliteratur sind eine Reihe von Druckschriften bekannt, die sich mit der Ausbildung von Raumtragwerken oder von Fachwerkbauten beschäftigen.

Fachwerklösungen gehen beispielsweise aus der DE 101 15 815 B4, der DE 37 15 228 C2 und der DE 28 00 720 hervor.

Raumtragwerke sind in der Regel unter dem Oberbegriff der Schalentragwerke oder der formaktiven Tragwerke zusammengefasst.

Wird die Oberfläche dieser Tragwerke in Stäbe aufgelöst, so spricht man im Allgemeinen von Gitterschalen, wenn sie auf Druck beansprucht werden, oder von Seilnetzen, wenn sie auf Zug beansprucht werden.

Bei der Stabilisierung der Systeme haben sich zwei unterschiedliche Möglichkeiten durchgesetzt. Einerseits können Schalen mit viereckigen gleichmaschigen Feldern beziehungsweise einer geraden Anzahl der sie begrenzenden Stäbe vorgesehen sein.

Obwohl mit derartigen Konstruktionen fast alle geometrischen Formen realisiert werden können, haben sie den Nachteil, dass geradzahlige Vielecke keine stabilisierende Wirkung entfalten können. Daher werden bei derartigen Konstruktionen die Vielecke mittels aussteifender Flächenelemente stabilisiert oder die Winkel der Stäbe werden mit Hilfe geeigneter Knotenkörper zueinander festgelegt. Bei der letztgenannten Methode treten Momentenkräfte in den Stäben auf. In der Regel ist deshalb eine zugfeste Verankerung der Schalenwände im Boden notwendig, um die entstehenden Horizontalkräfte aufzunehmen. Der Vorteil dieser Systeme liegt darin, dass sie aus gleich langen Stäben zusammengesetzt werden können. Die Verformung zu einer gekrümmten Fläche erfolgt dann in der Regel dadurch, dass quadratische Maschen in ein System von Rauten überführt werden, wobei sich entweder die Stäbe biegen müssen oder die Knoten von Gelenken gebildet werden, die anschließend fixiert werden. Auf derartige Tragwerke bezieht sich zum Beispiel die Druckschrift DE 41 01 276 C2.

Die grundsätzlich andere Methode, räumlich gekrümmte Tragschalen herzustellen, besteht darin, diese aus Dreiecksflächen zusammenzusetzen, wobei die Dreiecke zwangsläufig ebene, unverschiebbare Flächen bilden. Werden derartige Tragwerke aus Stäben hergestellt, so können diese auch gelenkig verbunden werden. Momentenkräfte in den Stäben können so vermieden werden.

Mögliche Arten, eine Kuppel aus Dreiecksflächen zu bilden, sind z. B. Rahmen-, Rippen-, Lamellen -, Rost-, Schwedlerkuppeln oder geodätische Kuppeln.

Geodätische Kuppeln sind insbesondere aus der US 2,682,235, der DE 22 32 114 B2, der DE 40 26 527 A1, der DE 30 35 698, der US 5,628,154 und der GB 2 022 647 A bekannt.

Die GB 2 022 647 A beschreibt eine aus einer Vielzahl von Rohren ausbildbare Kuppel, wobei jeweils mehrere Rohre in einem Kontenpunkt zusammengeführt und über unterschiedliche in der Patentanmeldung beschriebene Verbindungselemente zunächst verbunden und anschließend mittels einer Bolzenverbindung, die zentral durch das Verbindungselement geführt wird, verschraubt werden. Der Nachteil dieses Systems, insbesondere bei der Montage besteht darin, dass die Rohre erst dann ihre gewünschte endgültige Position einnehmen, wenn die Bolzenverbindung zusammen geschraubt worden ist.

Die Konstruktionssysteme der bekannten geodätischen Kuppeln haben gemeinsam, dass sie aus geraden und/oder gekrümmten Stäben gebildet sind und an Knotenpunkten in geeigneter Weise zusammengeführt werden.

Solche Systeme rationalisieren die Vorgänge, die zum Bau von architektonischen Gebilden nötig sind. Sie vereinfachen sowohl die Planung und Manipulation als auch den Aufbau und können umgebaut, d. h. wiederverwendet werden. Gegenüber einer individuellen handwerklichen Bauweise weisen diese Systeme viele weitere praktische und/oder auch ästhetische Vorteile auf. Die Konstruktionssysteme der eingangs beschriebenen Art bestehen aus einer begrenzten Anzahl aufeinander abgestimmter Systemteile, mit denen eine möglichst große Vielfalt von verschiedenen Strukturen, wie z. B. ebene Flächengebilde zur Abgrenzung von Räumen oder räumliche, ein- oder mehrdimensionale Konstruktionen wie Gebäude zu verschiedenen Zwecken gebaut werden können. Eine bestimmte Anzahl von Bauteilen stellt dabei ein entsprechendes System dar, wobei der Systemgehalt umso höher ist, je weniger verschiedene Systemteile, je weniger Teile insgesamt vorhanden und je vielfältiger die Möglichkeiten zum Bau verschiedener Strukturen (Variabilität) sind. Die wichtigsten Anforderungen an Systeme der eingangs beschriebenen Art sind: einfacher Zusammenbau der Systemteile, logische Reihenfolge der Teile beim Zusammenbau, hohe Festigkeit, geringes Gewicht, geringes Volumen, Formschönheit und Funktionalität.

Diese Anforderungen soll die vorliegende Erfindung durch ihre neue einfache konstruktive Lösung ebenfalls erfüllen.

Der Erfindung liegt daher die Aufgabe zugrunde, ein gattungsgemäßes System der eingangs genannten Art zu schaffen, welches eine minimale Anzahl verschiedener Bauteile aufweist und so mit einer minimalen Anzahl von Bauteilen erstellbar ist, einen einfachen und schnellen Zusammenbau mit geringen Anforderungen an die Intelligenz bei der Überlegung, in welcher Reihenfolge die Teile zusammengebaut werden müssen, ermöglicht; welches eine hohe Verschleißfestigkeit, ein geringes Gewicht und ein geringes Volumen aufweist. Das Konstruktionssystem soll ferner eine hohe Variabilität beim Bau verschiedener Strukturen ermöglichen, formschön aussehen und eine erhöhte Stabilität der als Tragwerke erstellten ebenen oder dreidimensionalen Raumtragwerke ermöglichen.

Die Erfindung zur Errichtung eines Raumtragwerks, insbesondere einer geodätischen Struktur, geht von einem Verbindungsknoten aus, der mindestens eine Verbindungsanordnung zur Verbindung mittels einer vorgebbaren am jeweiligen Verbindungsknoten angreifenden Anzahl von Strukturgrundelementen mit anderen gleichen Verbindungsknoten aufweist, wobei der Verbindungsknoten als Scheibe ausgebildet ist, die eine vorgebbare Anzahl von Schlüssellöchern aufweist, welches jeweils von einem Verbindungsmittel durchgriffen wird und in ein am Strukturgrundelement vorgehaltenes Aufnahmeelement eingreift, so dass jedes Strukturgrundelement in der gebildeten ersten Verbindungsanordnung drehbar gehalten ist und in beliebigen vorgebbaren Winkeln vorjustierbar und anschließend befestigbar ist.

Die Aufgabe wird gemäß der Erfindung dadurch gelöst, dass an mindestens einem Schlüsselloch auf der dem Strukturgrundelement zugewandten Seite der Scheibe zwischen Scheibe und Strukturgrundelement ein Sicherungsbügel mit einer Sicherungsbügelöffnung in einer festgelegten vorgebbaren Position an der Scheibe angeordnet ist, der das Strukturgrundelement durch eine zweite Verbindungsanordnung unverdrehbar an der Scheibe hält, befestigt und dadurch das Drehmoment der Scheibe im Strukturgrundelement aufnimmt.

Die erfindungsgemäßen Verbindungsknoten ermöglichen die Errichtung eines Raumtragwerkes, bei dem eine Mehrzahl von anordbaren Strukturgrundelementen, zwischen den erfindungsgemäßen Verbindungsknoten befestigt werden.

In bevorzugter Ausgestaltung der Erfindung ist die Scheibe zur Ausbildung eines bodennahen Verbindungsknotens einerseits als eine Fußscheibe ausgebildet. Diese Fußscheibe bildet vorzugsweise den ersten am Boden oder der Basis des Raumtragwerks ausgebildeten Verbindungsknoten aus.

Für die Scheibe, die als Fußscheibe verwendet wird, gilt in weiterer bevorzugter Ausgestaltung der Erfindung ferner, dass diese Scheibe auf einer Fußplatte mittels Höhenverstellelementen zur Justierung der unteren Verbindungsknoten gegenüber einem Boden angeordnet ist.

Die weiteren darüber liegenden Verbindungsknoten sind andererseits als Scheiben ausgebildet, wobei diese Verbindungsknoten keine spezifische Ausbildung zur Abstützung der Raumstruktur gegenüber einem Boden aufweisen.

Für diese Scheibe, die nicht als Fußscheibe verwendet wird, gilt in bevorzugter Ausgestaltung der Erfindung, dass an mindestens einem Schlüsselloch auf der dem Strukturgrundelement zugewandten Seite der Scheibe zwischen Scheibe und Strukturgrundelement ein Sicherungsbügel mit einer Sicherungsbügelöffnung in einer festgelegten vorgebbaren Position an der Scheibe anordbar ist, der das Strukturgrundelement durch eine so gebildete zweite Verbindungsanordnung unverdrehbar an der Scheibe hält, befestigt, wodurch in vorteilhafter Weise das Drehmoment der Scheibe im Strukturgrundelement aufgenommen wird.

Die zweite Verbindungsanordnung entspricht dabei der ersten Verbindungsanordnung, wobei das Verbindungsmittel hier nicht nur ein Schlüsselloch einer Scheibe durchgreift, sondern auch noch durch die Sicherungsbügelöffnung geführt wird, bevor es in das Aufnahmeelement des Strukturgrundelementes eingreift.

Die Scheibe weist dazu an mindestens einem Schlüsselloch Fixieröffnungen auf, die mit in die Fixieröffnungen einführbaren Fixiernasen des Sicherungsbügels korrespondieren, um den Sicherungsbügel in der festgelegten vorgebbaren Position an der Scheibe anzuordnen. Zudem weist der Sicherungsbügel zum Strukturgrundelement gerichtete Abkantungen auf, die einen Aufnahmeschuh ausbilden, um das Strukturgrundelement im Sicherungsbügel zu halten.

Das Strukturgrundelement weist ferner abgeflachte Endbereiche auf, die insbesondere bei Anordnung eines Sicherungsbügels selbstverständlich in ihrer Höhe und Breite im Wesentlichen mit dem gebildeten Aufnahmeschuh korrespondieren.

Für beide Scheiben - Fußscheibe oder Scheibe im oberen Bereich eines Raumtragwerkes gilt in bevorzugter Ausgestaltung der Erfindung, dass die Schlüssellöcher der Scheiben Öffnungen in der Art ausbilden, die einen langlochähnlichen Abgang ausbilden, in dessen Bereich eine mit dem Kopf des Verbindungsmittels korrespondierende Senkung in einer vorgebbaren Tiefe angeordnet ist, um durch den langlochähnlichen Abgang eine Führung an die gewünschte Fixierungsstelle des Verbindungsmittels zu erleichtern und durch die Senkung ein Herausrutschen des das Strukturgrundelement zumindest vorjustierenden und vorangezogenen Verbindungsmittels zu verhindern.

Ferner bevorzugt ist, dass das Strukturgrundelement die abgeflachten Endbereiche aufweist und das die erste und zweite Verbindungsanordnung als Verbindungsmittel ein Gewindebolzen oder dergleichen, insbesondere eine Sperrzahnschraube, ist, die mit der Sicherungsbügelöffnung im Sicherungsbügel und dem Aufnahmeelement korrespondiert, welches vorzugsweise als Nietmutter ausgebildet ist, die auf der der Scheibe abgewandten Seite fest auf dem Strukturgrundelement angeordnet ist.

Die Scheiben und die zugehörigen Verbindungsanordnungen zur Befestigung der Strukturgrundelemente erlauben die Ausbildung, Montage und Demontage des Raumtragwerkes mit im Wesentlichen standardisierten wenigen Bauteilen in einfacher Weise.

In bevorzugter Ausgestaltung der Erfindung bilden die angeordneten Strukturgrundelemente zwischen den Verbindungsknoten dreieckige Maschen aus, deren Größe von der vorgebbaren Länge und deren Winkellage innerhalb der Strukturgrundelemente des Raumtragwerks abhängig ist.

Schließlich ist das Raumtragwerk mit einer Hülle, insbesondere aus einem transluzenten Gewebe überziehbar, die an den Verbindungsknoten und/oder den Strukturgrundelementen in geeigneter Weise befestigbar ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine perspektivische Ansicht eines Raumtragwerk mit einer geodätischen Struktur;
- Figur 2: eine Draufsicht der Wesentlichen Bauteile eines Verbindungsknotens mit einem beispielhaft angeordneten Strukturgrundelement in der Anordnung mit einem Sicherungsbügel;
- Figur 3A: eine Seitenansicht gemäß Figur 2 kurz vor der Montage des beispielhaften Strukturgrundelementes an einem Verbindungsknoten;
- Figur 3B: eine Seitenansicht gemäß Figur 2 und 3A nach der Montage des beispielhaften Strukturgrundelementes an einem Verbindungsknoten;
- Figur 4A: eine perspektivische Innenansicht auf einen Verbindungsknoten, gemäß Figur 2 bis 3B mit an einer Scheibe angeordneten Strukturgrundelementen und einem mit einem Sicherungsbügel versehenen Strukturgrundelement und
- Figur 4B: eine perspektivische Innenansicht auf einen Verbindungsknoten mit an einer Fußscheibe angeordneten Strukturgrundelementen.

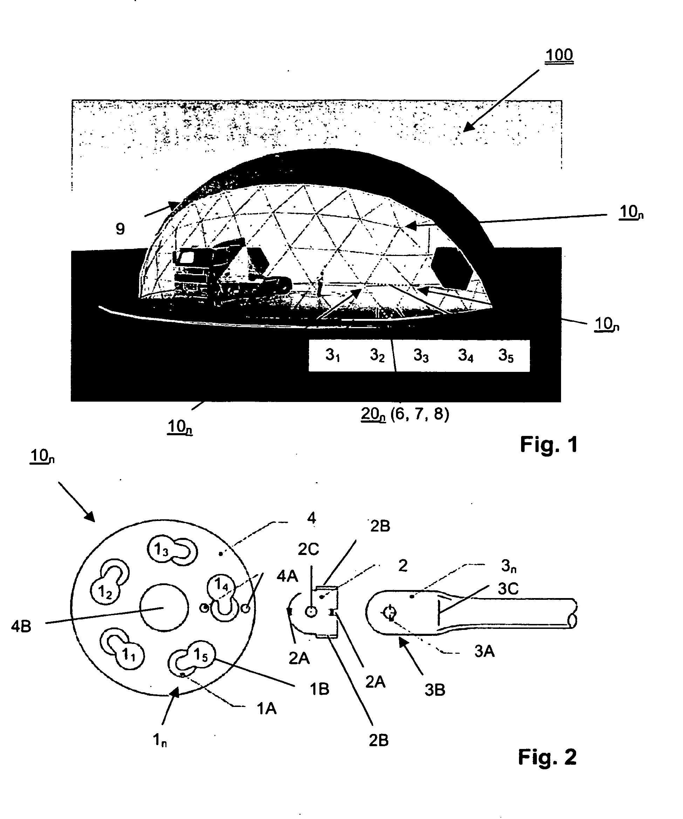

Figur 1 zeigt beispielhaft ein Raumtragwerk 100, welches als geodätische Struktur ausgebildet ist. Zur Errichtung einer solchen geodätischen Struktur werden Strukturgrundelemente 3 verwendet, die an Verbindungsknoten 10, 20 in einer vorgebbaren Anzahl n miteinander verbunden werden. Einige Strukturgrundelemente 3ₙ sind beispielhaft hervorgehoben und mit 3₁, 3₂, 3₃, 3₄, 3₅ gekennzeichnet. Die gestrichelt dargestellten Strukturgrundelemente 3₂, 3₃, 3₅ bilden dabei eine dreieckige Masche aus, die bei der Errichtung des Raumtragwerks 100 als Grundstruktur Verwendung findet. Ein Raumtragwerk 100 kann nur aus Verbindungsknoten 10ₙ ausgebildet sein. Es besteht jedoch auch die Möglichkeit, das Raumtragwerk mit Verbindungsknoten auszubilden, die speziell als Verbindungsfußknoten 20ₙ im Basisbereich/Fußbereich des Raumtragwerks 100 ausgebildet sind und die nicht im Basisbereich oder Fußbereich liegenden Verbindungsknoten 10ₙ einheitlich für den darüber liegenden Bereich des Raumtragwerks 100 auszubilden.

Grundsätzlich weist jeder Verbindungsknoten 10ₙ, 20ₙ - also sowohl der Verbindungsknoten 10 im oberen Bereich als auch der Verbindungsfußknoten 20 im Basisbereich - eine Scheibe 4 auf, die eine vorgebbare Anzahl n von Schlüssellöchern 1ₙ aufweist.

Eine solche Scheibe 4 ist in Figur 2 in einer Draufsicht dargestellt. Im Ausführungsbeispiel gemäß Figur 2 weist die Scheibe 4 beispielsweise fünf Schlüssellöcher 1₁ bis 1₅ auf, die in Uhrzeigerrichtung gesehen gekennzeichnet sind.

Das jeweilige Schlüsselloch 1ₙ weist eine Öffnung 1 B auf, welche in einen langlochähnlichen Abgang übergeht, der auf der dem Betrachter zugewandten Seite der Figur 2 eine Senkung 1 A aufweist.

Die Scheibe 4 weist zudem eine Scheibeninnenöffnung auf, die jedoch nicht zwangsweise benötigt wird; sie dient jedoch zur Gewichtsreduzierung und zur leichteren Handhabbarkeit der Scheibe 4. Eine Scheibe 4 dient also als Grundelement für jeden Verbindungsknoten 10ₙ, 20ₙ, wobei die wiederum Schlüssellöcher 1ₙ zur Befestigung der Strukturgrundelemente 3ₙ über eine erste Verbindungsanordnung 5, 3A dienen.

Das Strukturgrundelement 3ₙ, welches im Ausführungsbeispiel verwendet wird, ist beispielsweise eine Verbindungsstange, die mittels der ersten Verbindungsanordnung 5, 3A, einer Schraubverbindung mit der Scheibe 4 verschraubbar und somit befestigbar ist. Eine Schraube oder ein Bolzen 5 als Verbindungsmittel wird durch das Schlüsselloch 1ₙ geführt, die eine Verbindungsstange 3ₙ durchgreift und mit einer gegenüberliegenden Mutter 3A als Aufnahmeelement, an der Scheibe 4 befestigt.

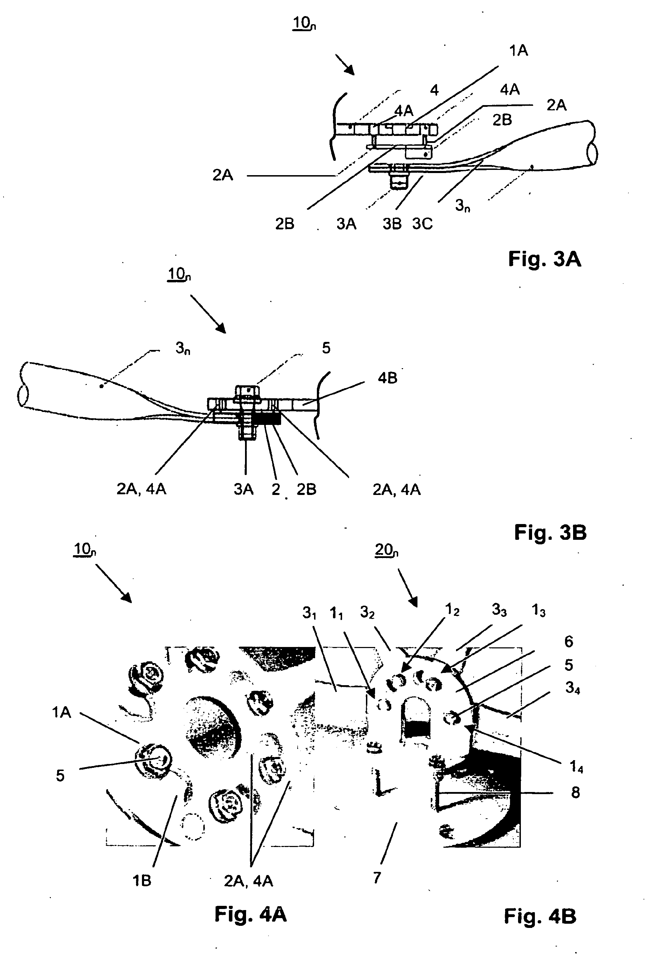

Wie Figur 2 in Verbindung mit Figur 3A zeigt, ist eine solche Mutter 3A durch eine bereits an der Verbindungsstange 3ₙ befestigte Nietmutter mit Innengewinde als Aufnahmeelemente 3A ersetzbar, so dass das Verbindungsmittel 5, der Gewindebolzen oder die Schraube mit entsprechendem Außengewinde problemlos durch das Schlüsselloch 1 greifen kann und die Schraubverbindung ohne Mitdrehen des Aufnahmeelementes 3A herstellbar ist.

Durch die spezielle Ausführung des Schlüsselloches 1ₙ ist das Verbindungsmittel 5 zudem durch das Schlüsselloch einführbar in den langlochähnlichen Abgang des Schlüsselloches 1ₙ schiebbar und durch leichtes Andrehen des Verbindungsmittels 5 über den entsprechenden Schraub- oder Bolzenkopf in der Senkung 1A des jeweiligen Schlüsselloches 1ₙ vorjustierbar. Das Verbindungsmittel 5 ist nach der Vorjustierung nicht mehr in der Lage, in die Öffnung 1 B auszuweichen, da der Kopf des jeweiligen Verbindungsmittels in der Senkung 1A gehalten wird.

Grundsätzlich ist die Errichtung eines Raumtragwerkes 100 mittels Scheibe 4 und Strukturgrundelement 3 und Verbindungsanordnung 5, 3A möglich, wobei die Montage insbesondere von geodätischen Strukturen schwierig ist, da die entsprechenden Winkel zwischen Scheibe 4 und den Strukturgrundelementen 3 unterschiedlich sind und sich bei der Montage ergeben, wodurch eine vollständige Befestigung der jeweiligen Verbindungsanordnungen 5, 3A dazu führen würde, dass diese Verbindungen wieder gelöst und nachfixiert und erneut angezogen werden müssen.

Um jedoch das Raumtragwerk 100 zunächst in einem möglichst stabilem Zustand vormontieren und vorjustieren zu können und alle sich ausbildenden Winkel zwischen den Strukturgrundelementen 3ₙ einstellen zu können, wird sozusagen eine vorjustierte Struktur ausgebildet, bei der jedoch erfindungsgemäß erreicht wird, dass sich die Scheibe 4 bei Anbringung der ersten Verbindungsanordnung 5, 3A und des ersten Strukturgrundelementes 3ₙ im vorjustierten aber noch nicht fest angezogenen Zustand nicht gegenüber dem Strukturgrundelement 3ₙ verdreht.

Dazu ist, wie die Figuren 2, 3A und 3B zeigen, ein Sicherungsbügel 2 anordbar, der zwischen Scheiben 4 und Strukturgrundelement 3ₙ angeordnet wird, und der das Verdrehen der Scheibe 4 gegenüber dem Strukturgrundelement 3 verhindert und somit eine Vorjustierung aller Strukturgrundelemente 3ₙ ermöglicht.

In der Draufsicht der Figur 2 ist der Sicherungsbügel 2 detailliert dargestellt, der eine Sicherungsbügelöffnung 2C aufweist, damit das Verbindungsmittel 5 den Sicherungsbügel durchgreifen kann. Ferner weist der Sicherungsbügel 2 Fixiernasen 2A auf, die zur Scheibe 4 gerichtet sind, und in Fixieröffnungen 4A der Scheibe 4 eingreifen können. Zudem bildet der Sicherungsbügel 2 einen Aufnahmeschuh 2B aus, der durch abgekantete Haltebleche ausgebildet ist, wobei der Aufnahmeschuh 2B zum Strukturgrundelement 3ₙ gerichtet ist und mit der Grundstruktur des Strukturgrundelementes 3ₙ korrespondiert.

Figur 3A zeigt die Seitenansicht einer Verbindung einer durch Anordnung des Sicherungsbügels entstehenden zweiten Verbindungsanordnung 5, 2C, 3A mit dem Sicherungsbügel 2 kurz vor der Montage. Der Sicherungsbügel 2 wird beispielhaft an einem Schlüsselloch 1₄ (Figur 2) mitmontiert, wobei die Fixiernasen 2A in die Fixieröffnungen 4A eingreifen und der Aufnahmeschuh 2B beidseitig an einem Strukturgrundelement 3ₙ angreift, so dass nach Einführung eines Verbindungsmittels 5 (in Figur 3A nicht dargestellt) und Verschrauben des Verbindungsmittels 5 in dem Aufnahmeelement 3A ein Verdrehen des Strukturgrundelementes 3 gegenüber der Scheibe 4 nicht mehr möglich ist. Das bei der weiteren Montage von Strukturgrundelementen 3ₙ auf die Scheibe 4 wirkende Drehmoment wird vom Sicherungsbügel 2 aufgenommen und über das Strukturgrundelement 3ₙ gemäß Figur 3A und 3B in die Gesamtstruktur, also das Raumtragwerk 100 (Figur 1), eingeleitet.

Um beispielsweise eine geodätische Struktur gemäß Figur 1 auszubilden, sind die Strukturgrundelemente 3ₙ, also die Verbindungsstangen, im Bereich 3C gekrümmt und bilden vorzugsweise abgeflachte Endbereiche 3B aus, die von dem Aufnahmeschuh 2B des Sicherungsbügels 2 einfach gehalten werden können.

Die Figuren 4A und 4B zeigen noch einmal zur Verdeutlichung Innenansichten der Verbindungsknoten 10, 20, wobei Figur 4B einen speziell als Verbindungsfußknoten 20 ausgebildeten Bereich darstellt.

Figur 4A zeigt dabei in einer Innenansicht einen Verbindungsknoten 10 hier mit sechs Schlüssellöchern 1ₙ, wobei wiederum ein Schlüsselloch 1ₙ die entsprechenden Fixieröffnungen 4A zeigt, in die ein montierter Sicherungsbügel 2 mit seinen Fixiernasen 2A von außen nach innen durchgreift. Das Verbindungsmittel 5 wird jeweils von innen nach außen in das Aufnahmeelement 3A eingeführt und verschraubt.

Figur 4B zeigt den speziell ausgebildeten Verbindungsfußknoten 20ₙ, der mit seinen Bezugszeichen beispielhaft zu Figur 1 korrespondierend dargestellt ist. Der Verbindungsfußknoten 20ₙ ist über Höhenverstellelemente, vorzugsweise Gewindebolzen 8, auf einer Fußplatte 7 montiert, so dass die als nach unten geöffnetes U ausgeführte Scheibe 6 gegenüber der Fußplatte 7 höhenverstellbar ist.

Grundsätzlich könnte die hier als U-Form ausgebildete Scheibe 6 auch als vollständige Scheibe 4 ausgeführt sein, so dass die u-förmige Ausbildung lediglich eine Ausführungsvariante darstellt. Da der Verbindungsfußknoten 20ₙ gegenüber dem Boden bereits verdrehsicher ist, kann hier auf einen Sicherungsbügel 2 verzichtet werden, so dass in den Verbindungsfußknoten 20ₙ lediglich Schlüssellöcher 1ₙ mit abgehenden Strukturgrundelementen 3ₙ ausgebildet werden, ohne dass ein Sicherungsbügel 2 benötigt wird. Bei den Schlüssellochöffnungen 1₁ und 1₄ kann sogar auf die langlochähnlichen Abgänge der Öffnungen 1 B verzichtet werden, da zugehörige Strukturgrundelemente 31 und 34 bei der Montage im Basisbereich sofort fest verschraubt werden können und spielfrei einsetzbar sind.

Eine Montage der geodätischen Struktur bzw. eines Raumtragwerkes 100 erfolgt vorzugsweise stets mittels einer dreieckigen Masche, bei der beispielsweise in Figur 4B dargestellte Strukturgrundelemente 3₂ und 3₃ an einer unverdrehbaren Scheibe 6 angeordnet sind, deren gegenüberliegende Enden jeweils mit einer Scheibe 4 versehen werden, wobei dann dort die zweite Verbindungsanordnung 5, 2C, 3A ausgeführt wird, bei der zwischen Scheibe 4 und Strukturgrundelement 3₂ und 3₃ ein Sicherungsbügel 2 wie oben beschrieben angeordnet wird. Die dadurch angeordneten Scheiben 4 sind gegen Verdrehen gesichert und eine weitere Montage von durch Strukturgrundelementen 3ₙ unter Ausbildung der dreieckigen Maschen zur Errichtung des gewünschten Raumtragwerkes ist ohne Probleme in gewünschter erreichbarer Stabilität möglich, wobei dabei erfindungsgemäß eine Vorjustierung in beliebigen vorgebbaren Winkeln möglich ist und eine endgültige Befestigung durch Anziehen der jeweiligen Schraubverbindung 5, 3A nach Errichtung eines teilweisen oder kompletten Raumtragwerkes durchgeführt werden kann.

Die bei der Errichtung des Raumtragwerkes 100 variierenden Winkel an den Verbindungsknoten 10ₙ. 20ₙ können somit sehr leicht und ohne vorherigen rechnerischen Aufwand zur Bestimmung der Winkel montiert und wieder demontiert werden.

Schließlich ist das Raumtragwerk 100 mit einer entsprechenden Hülle 9 versehbar, die an den Verbindungsknoten 10ₙ, 20ₙ und/oder den Strukturgrundelementen 3ₙ befestigbar ist. Die Befestigung erfolgt durch Spannelemente, wobei eine Befestigung der Hülle 9, wie in Figur 1 dargestellt, sowohl von innen als auch von außen möglich ist.

### BEZUGSZEICHENLISTE

- 1ₙ: Schlüsselloch
- 1A: Senkung
- 1 B: Öffnung/Loch
- 2: Sicherungsbügel
- 2A: Fixiernasen
- 2B: Aufnahmeschuh
- 2C: Sicherungsbügelöffnung
- 3ₙ: Strukturgrundelement [Verbindungsstange]
- 3A: Aufnahmeelement [Nietmutter/Innengewinde]
- 3B: abgeflachte Endbereiche
- 3C: Krümmung
- 4: Scheibe
- 4A: Fixieröffnung
- 4B: Scheibeninnenöffnung
- 5: Verbindungsmittel [Gewindebolzen/Schraube-Außengewinde]
- 6: Scheibe
- 7: Fußplatte
- 8: Höhenverstellelemente [Gewindebolzen]
- 9: Hülle
- 10: Verbindungsknoten
- 20: Verbindungsfußknoten
- 100: geodätische Struktur
- 5, 3A: erste Verbindungsanordnung
- 5, 2C, 3A: zweite Verbindungsanordnung
- index n: Anzahl

## Patentansprüche

1. Verbindungsknoten (10, 20) zur Errichtung eines Raumtragwerks (100), insbesondere einer geodätischen Struktur, wobei der Verbindungsknoten (10, 20) mindestens eine Verbindungsanordnung zur Verbindung mittels einer vorgebbaren am jeweiligen Verbindungsknoten (10, 20) angreifenden Anzahl (n) von Strukturgrundelementen (3) mit anderen gleichen Verbindungsknoten (10, 20) aufweist, wobei der Verbindungsknoten (10, 20) als Scheibe (4, 6) ausgebildet ist, die eine vorgebbare Anzahl (n) von Schlüssellöchern (1ₙ) aufweist, welches jeweils von einem Verbindungsmittel (5) durchgriffen wird und in ein am Strukturgrundelement (3ₙ) vorgehaltenes Aufnahmeelement (3A) eingreift, so dass jedes Strukturgrundelement (3ₙ) in der gebildeten ersten Verbindungsanordnung (5, 3A) drehbar gehalten ist und in beliebigen vorgebbaren Winkeln vorjustierbar und anschließend befestigbar ist, **dadurch gekennzeichnet, dass** an mindestens einem Schlüsselloch (1ₙ) auf der dem Strukturgrundelement (3ₙ) zugewandten Seite der Scheibe (4) zwischen Scheibe (4) und Strukturgrundelement (3ₙ) ein Sicherungsbügel (2) mit einer Sicherungsbügelöffnung (2C) in einer festgelegten vorgebbaren Position an der Scheibe (4) angeordnet ist, der das Strukturgrundelement (3ₙ) durch eine zweite Verbindungsanordnung (5, 2C, 3A) unverdrehbar an der Scheibe (4, 6) hält, befestigt und dadurch das Drehmoment der Scheibe (4) im Strukturgrundelement (3ₙ) aufnimmt.

2. Verbindungsknoten (10) nach Anspruch 1, **dadurch gekennzeichnet, dass** die Scheibe (4) an mindestens einem Schlüsselloch (1ₙ) Fixieröffnungen (4A) aufweist, die mit in die Fixieröffnungen (4A) einführbaren Fixiernasen (2A) des Sicherungsbügels (2) korrespondieren, um den Sicherungsbügel (2) in der festgelegten vorgebbaren Position an der Scheibe (4) anzuordnen.

3. Verbindungsknoten (10) nach Anspruch 1, **dadurch gekennzeichnet, dass** der Sicherungsbügel (2) zum Strukturgrundelement (3ₙ) gerichtete Abkantungen aufweist, die einen Aufnahmeschuh (2B) ausbilden, um das Strukturgrundelement (3ₙ) im Sicherungsbügel (2) zu halten.

4. Verbindungsknoten (10, 20) nach Anspruch 1, **dadurch gekennzeichnet, dass** die Schlüssellöcher (1ₙ) eine Öffnung (1B) ausbilden, die einen langlochähnlichen Abgang und in dessen Bereich eine mit dem Verbindungsmittel (5) korrespondierende Senkung (1A) aufweist, um eine Führung und Fixierung des Verbindungsmittels (5) zu erleichtern und durch die Senkung (1A) ein Herausrutschen des das Strukturgrundelement (3ₙ) zumindest vorjustierenden und vorangezogenen Verbindungsmittels (5) zu verhindern.

5. Verbindungsknoten (10, 20) nach Anspruch 1 oder 3, **dadurch gekennzeichnet, dass** das Strukturgrundelement (3ₙ) abgeflachte Endbereiche (3B) aufweist, die bei Anordnung eines Sicherungsbügels (2) nach Anspruch 2 bis 4 mit dem Aufnahmeschuh (2B) korrespondieren.

6. Verbindungsknoten (10, 20) nach Anspruch 1 bis 5, **dadurch gekennzeichnet, dass** die erste Verbindungsanordnung (5, 3A) als Verbindungsmittel (5) ein Gewindebolzen oder dergleichen, insbesondere eine Sperrzahnschraube ist, die mit dem Aufnahmeelement (3A) korrespondiert, welches vorzugsweise als Nietmutter ausgebildet ist, die auf der der Scheibe (4, 6) abgewandten Seite fest auf dem Strukturgrundelement (3ₙ) angeordnet ist.

7. Verbindungsknoten (20) nach Anspruch 1 und 4 bis 6, **dadurch gekennzeichnet, dass** die Scheibe (6) auf einer Fußplatte (7) mittels Höhenverstellelementen (8) zur Justierung des Verbindungsknotens (20) gegenüber einem Boden angeordnet ist.

8. Raumtragwerk (100), insbesondere geodätische Struktur, **gekennzeichnet durch** eine Mehrzahl von anordbaren Strukturgrundelementen (3ₙ), die zwischen den Verbindungsknoten (10, 20) nach Anspruch 1 bis 7 befestigt werden.

9. Raumtragwerk (100) nach Anspruch 8, insbesondere geodätische Struktur, **dadurch gekennzeichnet, dass** die Strukturgrundelemente (3ₙ) zwischen den Verbindungsknoten (10, 20) dreieckige Maschen ausbilden, deren Größe von der vorgebbaren Länge und der Winkellage der Strukturgrundelemente (3ₙ) abhängig ist.

10. Raumtragwerk (100) nach Anspruch 8, insbesondere geodätische Struktur, **dadurch gekennzeichnet, dass** das Raumtragwerk mit einer Hülle (9), insbesondere einem transluzenten Gewebe überziehbar ist, die an den Verbindungsknoten (10, 20) und/oder den Strukturgrundelementen (3ₙ) innen und/oder außen befestigbar ist.

## Claims

1. Connection node (10, 20) for the erection of a three-dimensional framework (100), in particular a geodesic structure, wherein the connection node (10, 20) has at least one connection arrangement for connecting to other identical connection nodes (10, 20) by means of a predeterminable number (n) of basic structural elements (3) which engage the respective connection node (10, 20), wherein the connection node (10, 20) is designed as a disc (4, 6) which has a predeterminable number (n) of keyholes (1ₙ), through each of which a connecting means (5) passes and which engages a receiving element (3A) provided on the basic structural element (3ₙ) so that each basic structural element (3ₙ) is rotatably held in the first connection arrangement (5, 3A) formed and can be preadjusted at any predeterminable angle and fastened afterwards, **characterized in that** a safety catch (2) with a safety catch aperture (2C) is arranged in a fixed predeterminable position on the disc (4) at at least one keyhole (1ₙ), on that side of the disc (4) which faces the basic structural element (3ₙ), between the disc (4) and the basic structural element (3ₙ), which safety catch (2) untwistably holds the basic structural element (3ₙ) on the disc (4, 6) by means of a second connection arrangement (5, 2C, 3A), fastens the basic structural element (3ₙ) and thereby takes up the torque of the disc (4) in the basic structural element (3ₙ).

2. Connection node (10) according to claim 1, **characterized in that** the disc (4) has locating apertures (4A) at at least one keyhole (1ₙ) which correspond to locating noses (2A) of the safety catch (2) in order to arrange the safety catch (2) in the fixed predeterminable position on the disc (4), which locating noses (2A) can be inserted into the locating apertures (4A).

3. Connection node (10) according to claim 1, **characterized in that** the safety catch (2) has bent edges directed towards the basic structural element (3ₙ), said bent edges forming a receiving shoe (2B) in order to hold the basic structural element (3ₙ) in the safety catch (2).

4. Connection node (10, 20) according to claim 1, **characterized in that** the keyholes (1ₙ) form an aperture (1B) which has a slot-like extension and, in the region of said extension, a countersinking (1A) which corresponds to the connecting means (5) in order to facilitate the guiding and fixing of the connecting means (5) and to prevent, by means of the countersinking (1A), the connecting means (5) from slipping out, said connecting means (5) at least preadjusting the basic structural element (3ₙ) and being pretightened.

5. Connection node (10, 20) according to claim 1 or 3, **characterized in that** the basic structural element (3ₙ) has flat end portions (3B) which correspond to the receiving shoe (2B) when arranging a safety catch (2) according to claims 2 to 4.

6. Connection node (10, 20) according to claims 1 to 5, **characterized in that** the first connection arrangement (5, 3A), as a connecting means (5), is a threaded bolt or the like, in particular a self-locking screw with a serrated bearing surface, which corresponds to the receiving element (3A) which is preferably designed as a rivet nut which is firmly arranged on the basic structural element (3ₙ) on that side which is turned away from the disc (4, 6).

7. Connection node (20) according to claims 1 and 4 to 6, **characterized in that** the disc (6) is arranged on a base plate (7) by means of height adjustment elements (8) for adjusting the connection node (20) relative to a ground.

8. Three-dimensional framework (100), in particular a geodesic structure, **characterized by** a plurality of arrangeable basic structural elements (3ₙ) which are fastened between the connection nodes (10, 20) according to claims 1 to 7.

9. Three-dimensional framework (100) according to claim 8, in particular a geodesic structure, **characterized in that** the basic structural elements (3ₙ) form triangular meshes between the connection nodes (10, 20), the size of said meshes depending on the predeterminable length and the angular position of the basic structural elements (3ₙ).

10. Three-dimensional framework (100) according to claim 8, in particular a geodesic structure, **characterised in that** the three-dimensional framework can be covered with a cover (9), in particular with a translucent fabric, which can be fastened to the inside and/or outside of the connection nodes (10, 20) and/or basic structural elements (3ₙ).

## Revendications

1. Noeud de liaison (10, 20) pour l'établissement d'un ouvrage porteur en trois dimensions (100), en particulier d'une structure géodésique, le noeud de liaison (10, 20) présentant au moins un dispositif de liaison pour la liaison au moyen d'un nombre (n) paramétrable d'éléments de base structurels (3) s'agrippant sur le noeud de liaison (10, 20) respectif avec d'autres noeuds de liaison (10, 20) identiques, le noeud de liaison (10, 20) étant constitué en tant que disque (4, 6) qui présente un nombre (n), paramétrable, de trous de serrure (1ₙ) qui sont respectivement pénétrés par un moyen de liaison (5) et qui engrènent dans un élément de réception (3A) placé devant l'élément de base structurel (3ₙ) de sorte que chaque élément de base structurel (3ₙ) est retenu dans le premier dispositif de liaison (5, 3A) formé de façon à pouvoir tourner et peut être pré-ajusté sous n'importe quels angles paramétrables et puis être fixé, **caractérisé en ce que**, sur au moins un trou de serrure (1ₙ), sur le côté du disque (4) tourné vers l'élément de base structurel (3ₙ), entre le disque (4) et l'élément de base structurel (3ₙ), il est disposé un étrier de blocage (2), avec une ouverture d'étrier de blocage (2C) dans une position sur le disque (4) stipulée paramétrable, qui retient, bloqué en rotation, l'élément de base structurel (3ₙ) par un deuxième dispositif de liaison (5, 2C, 3A) sur le disque (4, 6), le fixe et absorbe de ce fait le moment de rotation du disque (4) dans l'élément de base structurel (3ₙ).

2. Noeud de liaison (10) selon la revendication 1, **caractérisé en ce que** le disque (4) présente sur au moins un trou de serrure (1ₙ) des ouvertures de fixation (4A) qui correspondent à des becs de fixation (2A) de l'étrier de blocage (2) pouvant être introduits de concert dans les ouvertures de fixation (4A) pour disposer l'étrier de blocage (2) dans la position paramétrable stipulée sur le disque (4).

3. Noeud de liaison (10) selon la revendication 1, **caractérisé en ce que** l'étrier de blocage (2) présente des chanfreins dirigés vers l'élément de base structurel (3ₙ) qui constituent un patin de réception (2B) pour retenir l'élément de base structurel (3ₙ) dans l'étrier de blocage (2).

4. Noeud de liaison (10, 20) selon la revendication 1, **caractérisé en ce que** les trous de serrure (1ₙ) constituent une ouverture (1B) qui présente une sortie semblable à un trou oblong et, dans la zone de cette sortie, un abaissement (1A) correspondant au moyen de liaison (5) pour faciliter un guidage et une fixation du moyen de liaison (5), et pour empêcher par l'abaissement (1A) un échappement par glissement du moyen de liaison (5) tiré vers l'avant et pré-ajustant au moins l'élément de base structurel (3ₙ).

5. Noeud de liaison (10, 20) selon la revendication 1 ou 3, **caractérisé en ce que** l'élément de base structurel (3ₙ) présente des zones d'extrémité (3B) aplaties qui correspondent, en cas de disposition d'un étrier de blocage (2) selon les revendications 2 à 4, au patin de réception (2B).

6. Noeud de liaison (10, 20) selon les revendications 1 à 5, **caractérisé en ce que** le premier dispositif de liaison (5, 3A) est, en tant que moyen de liaison (5), un boulon fileté ou similaire, en particulier une vis à dents de blocage qui correspond à l'élément de réception (3A) qui est de préférence constitué en tant qu'écrou à river qui est disposé solidement sur l'élément de base structurel (3ₙ) sur le côté éloigné du disque (4, 6).

7. Noeud de liaison (20) selon les revendications 1 et 4 à 6, **caractérisé en ce que** le disque (6) est disposé sur une plaque d'assise (7) au moyen d'éléments de réglage en hauteur (8) pour l'ajustement du noeud de liaison (20) par rapport à un fond.

8. Ouvrage porteur en trois dimensions (100), en particulier structure géodésique, **caractérisé par** une multiplicité d'élément de base structurel (3ₙ) aménageables qui sont fixés entre les noeuds de liaison (10, 20) selon les revendications 1 à 7.

9. Ouvrage porteur en trois dimensions (100) selon la revendication 8, en particulier structure géodésique, **caractérisé en ce que** les éléments de base structurels (3ₙ) constituent entre les noeuds de liaison (10, 20) des mailles triangulaires dont la grandeur est fonction de la longueur paramétrable et de la position angulaire des éléments de base structurels (3ₙ).

10. Ouvrage porteur en trois dimensions (100) selon la revendication 8, en particulier structure géodésique, **caractérisé en ce que** l'ouvrage porteur en trois dimensions peut être revêtu d'une enveloppe (9), en particulier un tissu translucide, qui peut être fixée sur les noeuds de liaison (10, 20) et/ou les éléments de base structurels (3ₙ), à l'intérieur et/ou à l'extérieur.
